(19) **Europäisches Patentamt** / **European Patent Office** / **Office européen des brevets**

(11) **EP 3 156 943 A1**

(12) # EUROPEAN PATENT APPLICATION

(43) Date of publication:
19.04.2017 Bulletin 2017/16

(51) Int Cl.:
$G06K\ 9/62$ (2006.01)   $G06T\ 5/00$ (2006.01)

(21) Application number: 15306662.6

(22) Date of filing: 16.10.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicants:
- **Thomson Licensing
92130 Issy-les-Moulineaux (FR)**
- **INRIA - Institut National de Recherche en
Informatique et en Automatique
78150 Le Chesnay (FR)**

(72) Inventors:
- **GUILLEMOT, Christine
35042 Rennes Cedex (FR)**
- **ALAIN, Martin
35576 Cesson-Sévigné (FR)**
- **THOREAU, Dominique
35576 Cesson-Sévigné (FR)**
- **GUILLOTEL, Philippe
35576 Cesson-Sévigné (FR)**

(74) Representative: **Huchet, Anne et al
TECHNICOLOR
1-5, rue Jeanne d'Arc
92130 Issy-les-Moulineaux (FR)**

(54) **METHOD AND DEVICE FOR CLUSTERING PATCHES OF A DEGRADED VERSION OF AN IMAGE**

(57)     A method for clustering patches of a degraded version of an image is disclosed wherein the clusters are based on an error computed between a patch of the degraded version processed with an upgrade function and a patch of a full graded version of the image. In other words, the source image is used to determine clusters for the image to restore. A restoration framework based on a clustering according to the present principles is also disclosed wherein the optimal clusters are estimated from the degraded signal and aside indications obtained from the above described clustering method applied to a subset of the degraded signal for which the source signal is known.

FIGURE 3

EP 3 156 943 A1

**Description**

1. TECHNICAL FIELD

In the following, method and device for clustering patches of a degraded picture in view of a restoration are disclosed.

2. BACKGROUND ART

This section is intended to introduce the reader to various aspects of art, which may be related to various aspects of the present prenciples that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The present principles relate to the restoration of a degraded picture or of a degraded video. Restoration methods have been notably used for denoising and for super-resolution application, but those restoration methods are also compatible with a broader scope of applications, such as deblurring or color enhancement. In the following, we refer to these methods as restoration method or upgrade method.

Clustering-based restoration methods mainly comprises two steps: firstly clustering the degraded image (being a still picture or an image from a video), and secondly processing in a same way each cluster in order to restore the degraded input image. State-of-the-art methods mainly focus on designing efficient methods for the second step. They use generic clustering methods such as k-means for the first step.

A method for clustering an image where the method would advantageously improve the overall restoration performance is therefore desirable. Clustering-based methods have been explored recently and shown to bring significant improvement in the fields of de-noising for additive white Gaussian noise (AWGN) as disclosed in "Sparsity-based Image Denoising via Dictionary Learning and Structural Clustering" by W. Dong, X. Li, L. Zhang and G. Shi, CVPR 2011 as well as signal-dependent noise (SDN) as disclosed in "Signal dependent noise removal from a single image" by X. Liu, M. Tanaka and M. Okutomi, IEEE ICIP 2014. Such clustering based method was also proved useful for super-resolution as disclosed for instance in "Learning multiple linear mappings for efficient single image super-resolution", from Kaibing Zhang, Dacheng Tao, Xinbo Gao, Xuelong Li, and Zenggang Xiong, in IEEE Trans. On Image Processing, vol. 24, no. 3, march 2015.

While each one of the aforementioned documents discloses a specific method configured for their target application, all methods rely on k-means clustering. k-means is known for cluster analysis in data mining. K-means clustering aims to partition n observations into k clusters in which each observation belongs to the cluster with the nearest mean. In other words, the degraded image is split into patches, seen as observations, and the patches are classified into clusters by a k-means method applied to a characteristic extracted from the patches of the degraded image. As such, patches, considered as homogenous, are identically processed. However such clustering is not always optimal, as its design is generic and does not take into account the following process.

Consequently, a method for clustering an image where the method would advantageously improve the overall restoration performance is therefore desirable.

3. BRIEF SUMMARY

The purpose of the invention is to overcome at least one of the disadvantages of prior art by proposing a method for clustering patches of a degraded version of an image. A salient idea of the present principles is that in some applications, the original and full graded version of the image is known at some step in the image processing chain, naturally this step is usually not known at the restoration step itself. Therefore an optimal clustering is disclosed which relies on the minimization of the reconstruction error between the restored degraded version of an image and an original version of the image. Since the source image is not known from the restoration applications, a classification-based framework to estimate the optimal clusters according to the present principles is further disclosed.

The above applications can also be combined.

According to a first aspect, a method for clustering patches of a degraded version of an image is disclosed wherein the clusters are based on an error computed between a patch of a degraded version processed with an upgrade function and a patch of a full graded version of the image.

According to a specific characteristic, the method comprises determining patches of the degraded version belonging to a first cluster adapted to a first upgrade function and patches of the degraded version belonging to a second cluster adapted to a second upgrade function, wherein a patch belongs to the first cluster in case where an error computed between the patch of the degraded version processed with the first upgrade function and a patch of a full graded version of the image is lower than an error computed between the same patch of the degraded version processed with the second upgrade function and the same patch of the full graded version the image.

According to various embodiment, the method comprises:

- sending indication of each patches of the degraded version of the image belonging to the first cluster adapted to the first upgrade function; and of each patches of the degraded version of the image belonging to the second cluster adapted to the second upgrade function; or
- sending indication of clustering of patches of the degraded version in the first cluster adapted to the first upgrade function and in the second cluster adapted to the second upgrade function or
- sending indication of a subset of patches for clustering patches of the degraded version in the first cluster adapted to the first upgrade function and in the second cluster adapted to the second upgrade function.

According to a second aspect, a device is disclosed that comprises a processor configured to cluster patches of a degraded version of an image wherein the clusters are based on an error computed between a patch of the degraded version processed with an upgrade function and a patch of a full graded version of the image.

In a variant, a device comprising means for clustering patches of a degraded version of an image wherein the clusters are based on an error computed between a patch of the degraded version processed with an upgrade function and a patch of a full graded version of the image.

According to a specific embodiment, the device belongs to a set comprising:

- a mobile device ;
- a communication device ;
- a game device ;
- a set top box;
- a TV set;
- a Blu-Ray disc player;
- a player;
- a tablet (or tablet computer) ;
- a laptop ;
- a display;
- a camera and
- a decoding chip.

According to a third aspect, a computer program product comprising program code instructions to execute the steps of the clustering method when this program is executed on a computer is disclosed.

According to a fourth aspect, a processor readable medium is disclosed that has stored therein instructions for causing a processor to perform at least the clustering of patches of a degraded version of an image wherein the clusters are based on an error computed between a patch of the degraded version processed with an upgrade function and a patch of a full graded version of the image.

According to a fifth aspect, a non-transitory program storage device is disclosed that is readable by a computer, tangibly embodies a program of instructions executable by the computer to perform a method comprising clustering patches of a degraded version of an image wherein the clusters are based on an error computed between a patch of the degraded version processed with an upgrade function and a patch of a full graded version of the image.

While not explicitly described, the present embodiments may be employed in any combination or sub-combination. For example, the invention is not limited to the described color mapping operators and any adjustable mapper can be used.

Besides, any characteristic or embodiment described for the interpolating method is compatible with a device intended to process the disclosed method and with a computer-readable storage medium storing program instructions.

4. BRIEF SUMMARY OF THE DRAWINGS

Other characteristics and advantages of the present principles will appear through the description of non-limiting embodiments, which will be illustrated, with the help of the enclosed drawings:

- **Figure 1** represents a schematic view of a first embodiment of a device for clustering patches of a degraded version of an image ;
- **Figure 2** is a schematic view of the device for clustering patches of a degraded version of an image according to another exemplary and non-limiting embodiment;

- **Figure 3** represents a flowchart of a clustering method according to an exemplary and non-limiting embodiment of the present principles ;
- **Figures 4, 5 and 6** represent flowcharts of a restoration framework based on the present principles according to various embodiments.

## 5. DETAILED DESCRIPTION

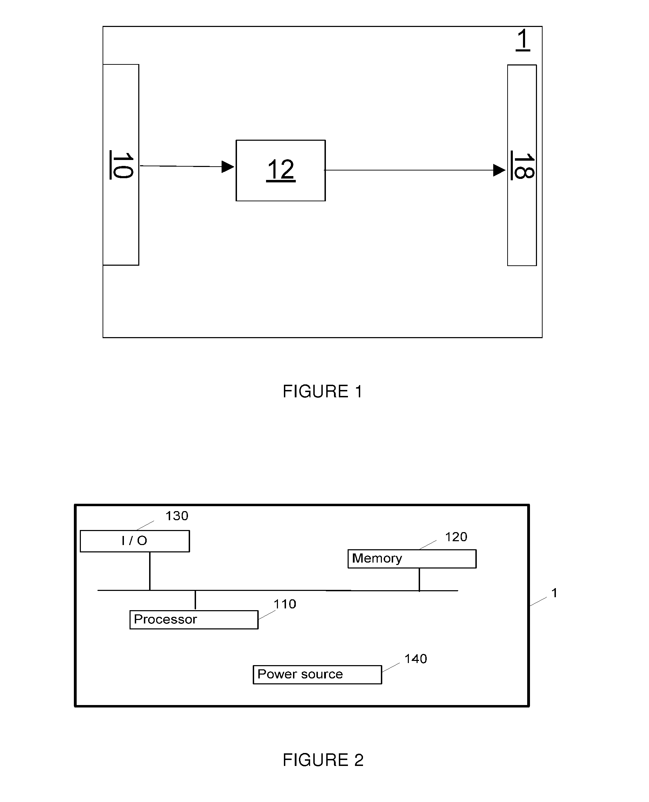

**Figure 1** is a schematic view of a device 1 for clustering patches of a degraded version of an image according to an exemplary and non-limiting embodiment. The device 1 comprises an input 10 configured to obtain a degraded version Y and a source version X of at least an image. The degraded version Y is obtained from the source version X by an application function. An upgrade function allows recovering a restored version Y' closed to source version X. According to non-limiting example, the upgrade function covers a broad range of applications such as:

- a de-noising application where Y is a noisy version of X;
- a super-resolution application where Y is a blurry and/or down sampled version of X;
- an inverse tone mapping application where Y is a tone mapped version of X;
- a compression application where Y is a coded then decoded version of X.

The input 10 is further configured to obtain clusters adapted to an update function.

According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

The input 10 is linked to a clustering module 12 configured to determine to which cluster a patch of degraded version Y of the image belongs to. Advantageously, the clustering module 12 further comprises a classifier and/or a learning module for the classifier as it will be described after with disclosure of various restoration framework. The output of the clustering module 12 is linked to an output 18. According to various restoration framework latter on detailed, the output 18 provides:

- for each cluster adapted to an update function, an indication of patches of Y belonging to the cluster C; or
- for each cluster adapted to the update function, an indication of a subset of patches of Y belonging to the cluster C so as to train a classifier;
- an indication of the clustering function.

As an example, the clustering in any of its output embodiments are stored in a remote or in a local memory, e.g. a video memory or a RAM, a hard disk. Thus the clustering is advantageously performed off-line in device 1 and results are available for a future on-line process in a remote restoration device. In a variant, the clustering output are sent to a restoration device by means of a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

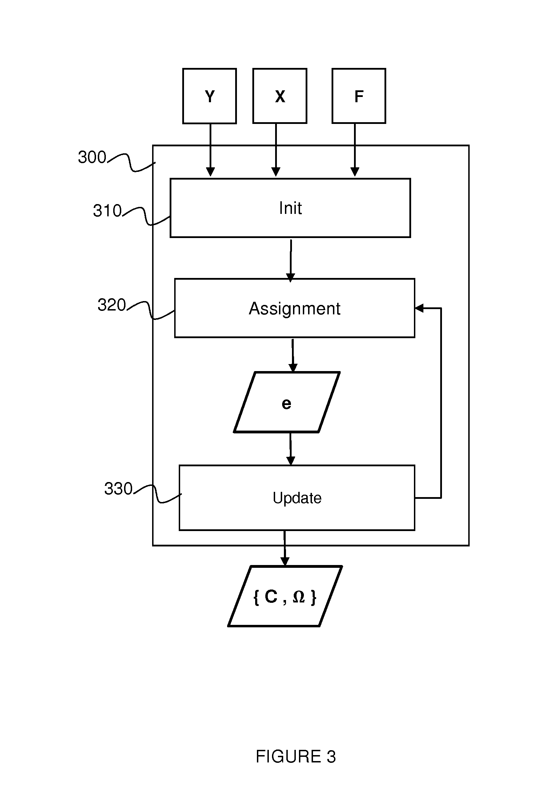

**Figure 2** represents an exemplary architecture of a clustering device 1 according to an exemplary and non-limiting embodiment. The clustering device 1 is configured to execute the method described with reference to figure 3. The clustering device 1 comprises one or more processor(s) 110, which could comprise, for example, a CPU, a GPU and/or a DSP (English acronym of Digital Signal Processor), along with internal memory 120 (e.g. RAM, ROM and/or EPROM). The clustering device 1 comprises one or more Input/Output interface(s) 130, each adapted to display output information and/or allow a user to enter commands and/or data (e.g. a keyboard, a mouse, a touchpad, a webcam); and a power source 140 which may be external to the clustering device 1. The clustering device 1 may also comprise one or more network interface(s) (not shown). The degraded version and the source version of the picture may be obtained from a source. According to different embodiments, the source can be, but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and

- an image capturing circuit (e.g. a sensor such as, for example, a CCD (or Charge-Coupled Device) or CMOS (or Complementary Metal-Oxide-Semiconductor)).

According to different embodiments, the clustering of the degraded version of the picture may be sent to a destination, e.g. a restoration device or display device. As an example, the clustering of the degraded version of the picture is stored in a remote or in a local memory, e.g. a video memory or a RAM, a hard disk. In a variant, the clustering is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the clustering device 1 further comprises a computer program stored in the memory 120. The computer program comprises instructions which, when executed by the clustering device 1, in particular by the processor 110, enable the clustering device 1 to execute the method described with reference to figure 3. According to a variant, the computer program is stored externally to the clustering device 1 on a non-transitory digital data support, e.g. on an external storage medium such as a HDD, CD-ROM, DVD, a read-only and/or DVD drive and/or a DVD Read/Write drive, all known in the art. The clustering device 1 thus comprises a mechanism to read the computer program. Further, the clustering device 1 could access one or more Universal Serial Bus (USB)-type storage devices (e.g., "memory sticks.") through corresponding USB ports (not shown).

According to exemplary and non-limiting embodiments, the clustering device 1 can be, but not limited to:

- a mobile device ;
- a communication device ;
- a game device ;
- a set top box;
- a TV set;
- a tablet (or tablet computer) ;
- a laptop ;
- a video player, i.e. a Blu-Ray disc player;
- a display;
- a camera; and
- a decoding chip.

The clustering device 1 is advantageously part of a coder or of a TV set.

**Figure 3** represents a flowchart of a clustering method according to an exemplary and non-limiting embodiment of the present principles. The clustering algorithm is performed on patches extracted from a degraded version (or signal) Y of a source version (or signal) X of an image. A patch y extracted from the degraded signal Y is noted $y \in Y$ and the corresponding patch in the source signal is noted $x \in X$. A patch is a set of pixels of an image. According to different variants adapted to the various application, patches are overlapping or on the contrary non-overlapping. Patches are identified by their location in the image. According to a salient characteristic clusters are based on an error computed between a patch y of the degraded version processed with an upgrade function F and a patch x of a full graded version of the image. The cluster formulation according to the present principles can be formalized by the following equation:

$$(C^*, \Omega^*) = \underset{C,\Omega}{\mathrm{argmin}} \sum_{i=1\dots k} \sum_{x,y \in C_i} |x - process(y, \Omega_i)|^2$$

Where $C = \{C_1 \dots C_k\}$ is the set of clusters, with k the number of clusters, and *process* is the restoration function F apply on each cluster $C_i$, with $\Omega$ the set of parameters for restoration *process.* Advantageously, *k* the number of clusters, as well as *process* the restoration function are known. A greedy algorithm is disclosed to solve the above equation taking as input *X, Y, k, process* and as output $C = \{C_1 \dots C_k\}$ and the set $\Omega$ of paramters $\Omega_i$ respectively applied for each cluster $C_i$.

Sub steps of the clustering 300 are now detailed.

In an initialization step 310, patches are clustered into $C = \{C_1 \dots C_k\}$. In a first variant the initialization is random where y are randomly assigned to a cluster. According to a second variant, a generic clustering algorithm such as k-means is applied to the set of patches y.

Then in an iterative update the following steps are performed until convergence is reached that is until the clusters do not change.

In an assignment step 320, patches y are reassigned to clusters :

$$\forall i = 1 \dots k, C_i = \{x, y : |x - process(y, \Omega_i)|^2 \leq |x - process(y, \Omega_j)|^2 \forall j = 1 \dots k, x$$

$$\in X, y \in Y\}$$

Let's consider the variant limited to 2 clusters $C_1$ and $C_2$ for simplification of the description. Thus, in the step 320, a patch y of a degraded version Y is determined as belonging to a first cluster $C_1$ adapted to a first upgrade function *process with* $\Omega_1$ or to a second cluster $C_2$ adapted to a second upgrade function *process with* $\Omega_2$ in case where an error e = |x - *process*(y, $\Omega_1$)| computed between the patch y of degraded version processed with the first upgrade function *process with* $\Omega_1$ and a patch x of a full graded version of the image is lower than an error e = |x - *process*(y, $\Omega_2$)| computed between the patch y of the degraded version processed with the second upgrade function *process with* $\Omega_2$ and the patch x of the full graded version the image :

$$C_1 = \{x, y : |x - process(y, \Omega_1)|^2 \leq |x - process(y, \Omega_2)|^2 \forall x \in X, y \in Y\}$$

Then in a update step 330 the parameters values are adjusted and obtained from:

$$\forall i = 1 \dots k, \Omega_i = \underset{\Omega}{\operatorname{argmin}} \sum_{x, y \in C_i} |x - process(y, \Omega)|^2$$

The assignment step is well defined and can be computed for any restoration function *process*. However, the update step can not be generally defined, as the set $\Omega$ of parameters is specific to each *process* algorithm.
Thus two embodiments of the update step, each corresponding to a specific restoration function *process* are detailed hereafter.
According to a first embodiment, the restoration process is a de-noising with soft or hard thresholding in the transform domain as disclosed in *"Denoising by soft-thresholding"* by Donoho, David L., IEEE Transactions on Information Theory 1995 or in *"Improved wavelet denoising via empirical Wiener filtering"* by Ghael, Sandeep P, Sayeed, Akbar M, Baraniuk, Richard G, Proceedings of SPIE 1997. The de-noising function comprises 3 steps described below. Here the only set $\Omega$ of parameters is the threshold $\tau = \{\tau_1 \dots \tau_k\}$ thus a cluster $C_i$ is adapted to the threshold value $\tau_i$ of the denoising function process. Thus if *y'* refers to the de-noised version of *y*, we have

$$y' = process(y, \tau)$$

*with*

- step 1) Y = *transform*(y)
- step 2) Y' = *threshold*($\Upsilon$, $\tau$)
- step 3) *y' = transform*$^{-1}$($\Upsilon$') *transform* is usually the Fourier transform, the Discrete Cosines Transform (DCT) or a Wavelet transform. Any other transform leading to a sparse representation of the signal is compatible with the present principles. The *threshold* function can be either the soft thresholding or hard thresholding function. For a coefficient c and a threshold $\tau$, these funtions are defined as:

$$soft\ thresholding(c, \tau) = \begin{cases} 0, if\ |c| < \tau \\ c - sign(c) * \tau, otherwise \end{cases}$$

$$hard\ thresholding(c, \tau) = \begin{cases} 0, if\ |c| < \tau \\ c, otherwise \end{cases}$$

In others words, a transform function is applied to a patch y, the obtained value Y' of y in the transform domain is then clipped with a threshold $\tau$ and the de-noised version of the patch *y'* is obtained from the inverse transform function applied to the clipped value $\Upsilon$'.

The assignment step is performed as described above, with $\Omega = \tau$.

$$\forall i = 1 \dots k, C_i = \{x, y: |x - process(y, \tau_i)|^2 \leq |x - process(y, \tau_j)|^2 \forall j = 1 \dots k, x \in X, y \in Y\}$$

The update step is described below:

$$\forall i = 1 \dots k, \tau_i = \{\tau^*: |x - process(y, \tau^*)|^2 \leq |x - process(y, \tau)|^2, \forall \tau = \tau_{min} \dots \tau_{max}, \forall x, y \in C_i\}$$

In a first variant, the values $\tau_{min}$ and $\tau_{max}$ are defined by the user. In another variant, the values $\tau_{min}$ and $\tau_{max}$ are defined as the minimum and maximum values for a patch y in the transform domain Y.

According to another variant, not only one, but a set of transforms is considered for the de-noising function. *transform* thus becomes a parameter, and the update step finds for each cluster the optimal parameters couple (*transform_i*, $\tau_i$).

According to a second embodiment, the restoration process is a linear mappings for de-noising or super-resolution application. The de-noising algorithm is described below and is the results of a product of the patch with a linear mapping projection matrix *P*. Here the only set $\Omega$ of parameters is the linear mapping projection matrix *P*, and if *y'* refers to the de-noised version of *y* we have :

$$y' = process(y, P) = P * y$$

The assignment step is performed as described above, with $\Omega = P$.

$$\forall i = 1 \dots k, C_i = \{x, y: |x - P_i * y|^2 \leq |x - P_j * y|^2 \forall j = 1 \dots k, x \in X, y \in Y\}$$

The update step can be formulated in a matrix form as follow:

$$P_i = \underset{P}{\operatorname{argmin}} |X_i^T - Y_i^T P^T|^2$$

Where $X_i$ and $Y_i$ contains in their columns the vectorized source and degraded patches respectively from cluster $C_i$.

Minimizing $|X_i - Y_i P|^2$ is a linear regression problem which solution is known, for instance in "Solving Least Squares Problems" by Lawson, C. L.; Hanson, R. J., Englewood Cliffs, NJ: Prentice-Hall 1964. The update step thus comes down to the following equation:

$$P_i = X_i Y_i^T (Y_i Y_i^T)^{-1}$$

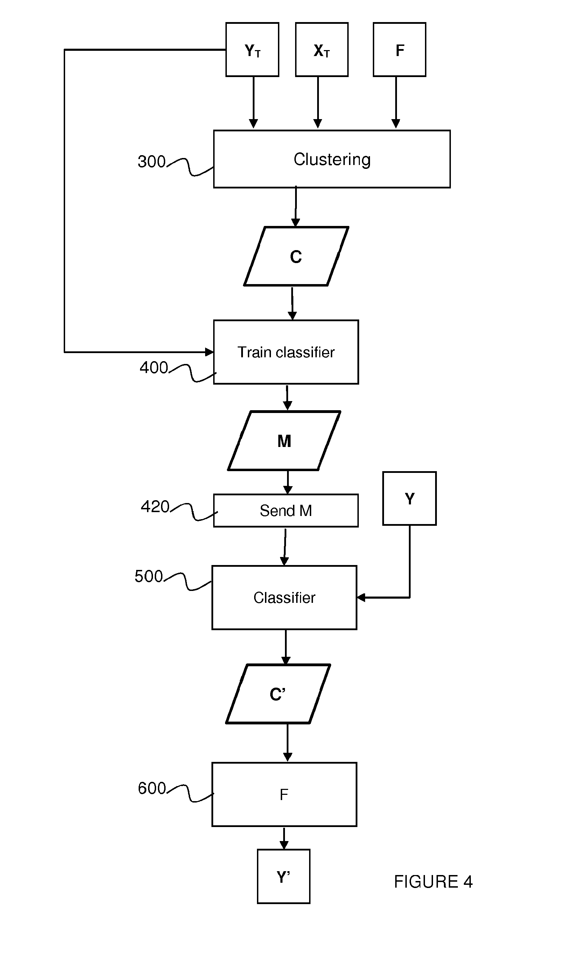

**Figures 4, 5 and 6** represent flowcharts of various embodiments of a restoration framework based on a clustering according to the present principles. Indeed, for many applications, the source version *X* is unknown at the step (or device) implementing the restoration function. A restoration classification-based framework is therefore disclosed to estimate the optimal clusters from the degraded signal *Y* and aside indications obtained from the above described clustering method.

In a nutshell, a training phase is performed on a classifier from a training dataset $Y_T$ for which the source images $X_T$ are known. The learned classifier M is then used to predict the optimal clusters C' for degraded images for which the corresponding source image is unknown. According to the various embodiments, the aside indications used to predict the optimal clusters C' for degraded images for which the corresponding source image is unknown change.

**Figure 4** represents a flowchart of an embodiment of a restoration framework comprising sending indication of clustering of patches of the degraded version in one of the clusters of the degraded version of the image wherein a cluster is adapted to a specific upgrade function. We consider that a training dataset is available, containing several degraded signals $Y_T$ and their corresponding source signals $X_T$. Such the training dataset T may be a generic image database for instance.

In a first step 300, a clustering of patches of the dataset $Y_T$ for which the source images $X_T$ are known is performed according to the present principles and results in optimal clusters $C$ associated with optimal parameters $\Omega$ of the restoration function.

In a second step 400, a classifier is trained from the optimal clusters $C$ resulting in classifier model $M$. The skilled in the art will understand that optimal parameters $\Omega$ of the restoration function are not modified in this step. They come with the optimal clusters $C$ used to train the classifier. The trained classifier is thus configured to predict the optimal cluster labels from the degraded signal only:

$$M = trainClassifier(Y_T, C)$$

Where $M$ is the classifier model.

Classification, also known as supervised learning, has been well studied. The design of a specific classification algorithm is out the scope of the present principles, and any existing algorithms is compatible with the present principles. Among non-limiting examples, any of the following models is considered for the supervised learning of the classifier:

- $k$ Nearest Neighbors ($k$NN)
- Support Vector Machine (SVM)
- Decision Tree
- Ensemble methods
- Artificial Neural Network
- Deep Neural Network.

In a third step 420, the trained classifier $M$ is sent to a remote storage device for online processing or to the device processing the restoration method. In other words, an indication, corresponding to the classifier model, of clustering of patches of the degraded version in one of the clusters wherein a cluster is adapted to a specific upgrade function are sent to a remote device.

In a fourth step 500, the clusters C' adapted to the restoration application are determined for a degraded signal $Y$ for which a source signal $X$ is not available (unlike the degraded signal $Y_T$ of the dataset T). The clusters C' are obtained using the classifier model as explained above:

$$C' = estimateCluster(Y, M)$$

Where C' are the estimated clusters.

In a last step 600, the restoration algorithm is possibly applied based on the obtained clusters C' to recover a restored version of the image Y' by applying the restore function to patches of Y belonging to an estimated cluster with the parameters attached to this estimated cluster.

Depending on the application, different workflows are considered. In the case of generic restoration as shown on figure 4, the classifier with associated optimal clusters parameters $\Omega$ is trained off-line and then stored in a database. Then in an on-line processing phase, one queries the database to obtain the classifier M and the associated parameters $\Omega$ for restoration. The classifier is used to estimate the clusters C' of new degraded signals. Accordingly, the clustering step 300 and the classifier training 400 of figure 4 are performed in a preliminary phase. Then the classifier model M is send 420 and stored in a database. This classifier model M is accessed in an on-line processing to estimate cluster of the degraded version Y. This embodiment is particularly well adapted to applications such as de-noising or super-resolution. As the skilled in the art knows, several super-resolution methods, such as the one disclosed in "Learning multiple linear mappings for efficient single image super-resolution", from Kaibing Zhang, Dacheng Tao, Xinbo Gao, Xuelong Li, and Zenggang Xiong, in IEEE Trans. On Image Processing, vol. 24, no. 3, march 2015, already require an access to an external database which stores dictionary consisting of pair of patches of low and high resolution.

Another application is the restoration of an image with quantification noise resulting from compression application. In this restoration application, the source signal X is known for all coded image Y, consequently, the training dataset T may be all or part of the sequence to be processed.

In a first embodiment of the restoration framework illustrated on figure 4, the clustering step 300 is advantageously processed for each source image X and coded image Y (and not only on a subset $X_T Y_T$) and the classifier training 400 of figure 4 are performed in the encoder. Then the classifier model M is send 420 as aside indication to the decoder for local processing. Advantageously, the model M is then used to retrieve 500 the clusters C' on the same coded/decoded image $Y = Y_T$ used for the training. Since the signal used to train the classifier is the same as the one used to estimate the cluster labels, the estimation of the labels should be accurate.

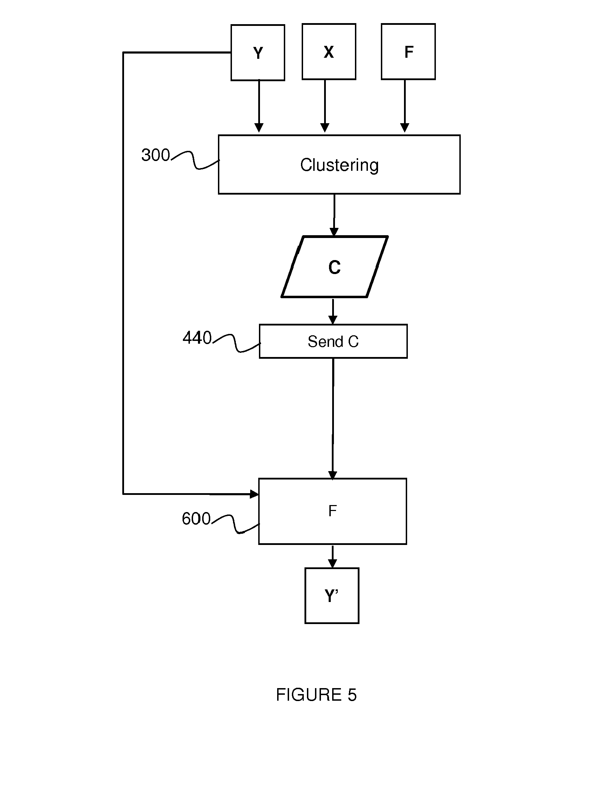

In a second embodiment of the restoration framework illustrated on figure 5, since the optimal clusters C may be natively obtained in a coder application for the whole image, the optimal clusters C themselves obtained at the coder are sent 440 to the decoder. However such framework induced a large amount of aside indications. **Figure 5** represents a flowchart of an embodiment of a restoration framework comprising sending 440 indication of each patches of the degraded version of the image belonging to each one of the clusters adapted to a specific upgrade function.

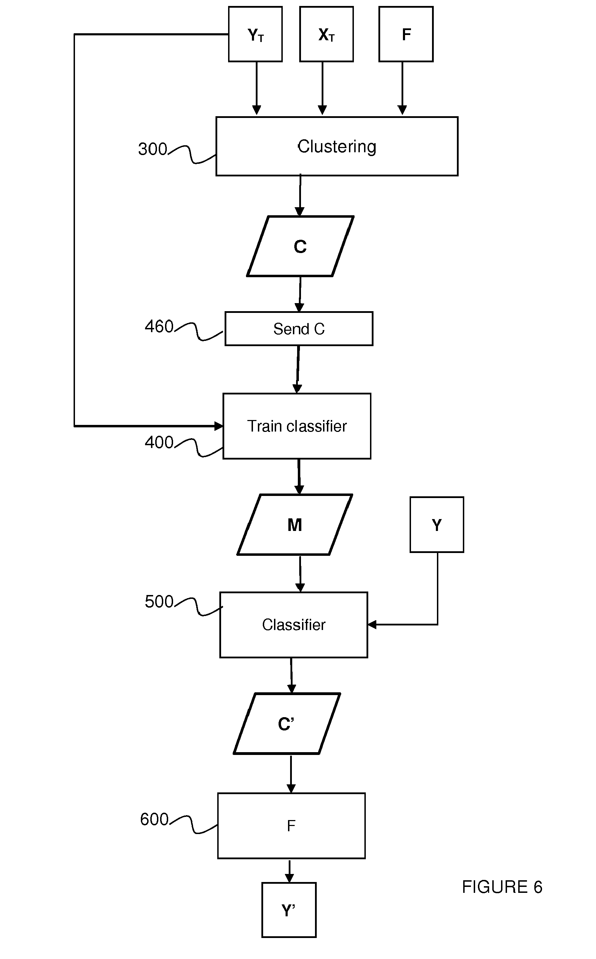

In a third embodiment of the restoration framework illustrated on figure 6, the optimal cluster labels C obtained for a subset of the patches of the degraded version of the image are send 460 to a remote restoration device such as the decoder in the present framework. The classifier is trained 400 at the decoder side on the subset of the coded/decoded signal $Y_T$ corresponding to the known optimal clusters C. The model M is then used on the full coded/decoded signal Y to estimate the optimal cluster labels.

Thus **Figure 6** represents a flowchart of an embodiment of a restoration framework comprising sending indication of a subset of patches for clustering patches of the degraded version of the image belonging to each one of the clusters adapted to a specific upgrade function.

Thus in a compression context, the source signal is known at the encoder and the clustering method can be applied. The classifier model M based on optimal parameters $\Omega$, should then be sent 440 to the decoder as metadata or aside indications. Alternatively, a subset of the optimal clusters labels C can be sent 460 to the decoder, where the classifier can then be learned.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for clustering patches of a degraded version (Y) of an image, the method being **characterized in that** clusters are based on an error computed between a patch of said degraded version (Y) processed with an upgrade function and a patch of a full graded version (X) of said image.

2. The method of claim 1 comprising determining (320) patches of said degraded version belonging to a first cluster adapted to a first upgrade function and patches of said degraded version belonging to a second cluster adapted to a second upgrade function, wherein a patch belongs to said first cluster in case where an error computed between said patch of said degraded version processed with said first upgrade function and a patch of a full graded version of said image is lower than an error computed between said patch of said degraded version processed with said second upgrade function and said patch of said full graded version said image.

3. The method of claim 2 further comprising

   • sending (440) indication of each patches of said degraded version of the image belonging to said first cluster adapted to said first upgrade function; and of each patches of said degraded version of the image belonging to said second cluster adapted to said second upgrade function.

4. The method of claim 2 further comprising

   • sending (420) indication of clustering of patches of said degraded version in said first cluster adapted to said first upgrade function and in said second cluster adapted to said second upgrade function.

5. The method of claim 2 further comprising

   • sending indication (460) of a subset of patches for clustering patches of said degraded version in said first cluster adapted to said first upgrade function and in said second cluster adapted to said second upgrade function.

6. A device (1) comprising a processor (110) configured to cluster patches of a degraded version of an image wherein the clusters are based on an error computed between a patch of said degraded version processed with an upgrade function and a patch of a full graded version of said image.

7. A computer program product comprising program code instructions to execute the steps of the clustering method according to any of claims 1 to 6 when this program is executed on a computer.

8. A processor readable medium having stored therein instructions for causing a processor to perform clustering of patches of a degraded version of an image wherein the clusters are based on an error computed between a patch of said degraded version processed with an upgrade function and a patch of a full graded version of said image.

9. A non-transitory program storage device, readable by a computer, tangibly embodying a program of instructions executable by the computer to perform a method comprising clustering patches of a degraded version of an image wherein the clusters are based on an error computed between a patch of said degraded version processed with an upgrade function and a patch of a full graded version of said image.

10. The device according to claim 6, wherein said device belongs to a set comprising:

- a mobile device ;
- a communication device ;
- a game device ;
- a set top box;
- a TV set;
- a Blu-Ray disc player;
- a player;
- a tablet;
- a laptop ;
- a display;
- a camera;
- an encoding and
- a decoding chip.

11. A device (1) comprising means for clustering (12) patches of a degraded version of an image wherein the clusters are based on an error computed between a patch of said degraded version processed with an upgrade function and a patch of a full graded version of said image.

FIGURE 1

FIGURE 2

FIGURE 3

FIGURE 4

FIGURE 5

FIGURE 6

Europäisches
Patentamt

European
Patent Office

Office européen
des brevets

# EUROPEAN SEARCH REPORT

Application Number

EP 15 30 6662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BIHAN WEN ET AL: "Structured Overcomplete Sparsifying Transform Learning with Convergence Guarantees and Applications", INTERNATIONAL JOURNAL OF COMPUTER VISION., vol. 114, no. 2-3, 19 October 2014 (2014-10-19), pages 137-167, XP055265889, US ISSN: 0920-5691, DOI: 10.1007/s11263-014-0761-1 * Section 5.; figure 2 * | 1-11 | INV. G06K9/62 G06T5/00 |
| A | DABOV K ET AL: "Image Denoising by Sparse 3-D Transform-Domain Collaborative Filtering", IEEE TRANSACTIONS ON IMAGE PROCESSING, IEEE SERVICE CENTER, PISCATAWAY, NJ, US, vol. 16, no. 8, 1 August 2007 (2007-08-01), pages 2080-2095, XP011485829, ISSN: 1057-7149, DOI: 10.1109/TIP.2007.901238 * the whole document * | 1-11 | |
| A | EP 2 930 684 A1 (NEC CORP [JP]) 14 October 2015 (2015-10-14) * paragraph [0201] - paragraph [0206] * | 1-11 | TECHNICAL FIELDS SEARCHED (IPC) G06K G06T |

The present search report has been drawn up for all claims

| Place of search | Date of completion of the search | Examiner |
|---|---|---|
| The Hague | 18 April 2016 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6662

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2016

| Patent document cited in search report | | Publication date | Patent family member(s) | Publication date |
|---|---|---|---|---|
| EP 2930684 | A1 | 14-10-2015 | CN 104969257 A | 07-10-2015 |
| | | | EP 2930684 A1 | 14-10-2015 |
| | | | US 2015302566 A1 | 22-10-2015 |
| | | | WO 2014087652 A1 | 12-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. DONG ; X. LI ; L. ZHANG ; G. SHI.** Sparsity-based Image Denoising via Dictionary Learning and Structural Clustering. *CVPR,* 2011
- **X. LIU ; M. TANAKA ; M. OKUTOMI.** Signal dependent noise removal from a single image. *IEEE ICIP,* 2014
- **KAIBING ZHANG ; DACHENG TAO ; XINBO GAO ; XUELONG LI ; ZENGGANG XIONG.** Learning multiple linear mappings for efficient single image super-resolution. *IEEE Trans. On Image Processing,* March 2015, vol. 24 (3

- **DONOHO, DAVID L.** Denoising by soft-thresholding. *IEEE Transactions on Information Theory,* 1995
- **GHAEL ; SANDEEP P ; SAYEED ; AKBAR M, BARANIUK ; RICHARD G.** Improved wavelet denoising via empirical Wiener filtering. *Proceedings of SPIE,* 1997
- **LAWSON, C. L.; ; HANSON, R. J.** Solving Least Squares Problems. Prentice-Hall, 1964